# EUROPÄISCHE PATENTSCHRIFT

(11) **EP 0 951 772 B1**
(45) Veröffentlichungstag und Bekanntmachung des Hinweises auf die Patenterteilung: **05.03.2003**
(21) Anmeldenummer: 97912041.7
(22) Anmeldetag: 06.10.1997
(51) Int. Cl.: H04L 29/06, H04Q 7/32

(54) **FUNKMODUL ZUR INTEGRATION IN EXTERNE FUNKTIONSEINHEITEN**
RADIO MODULE INTEGRATED INTO EXTERNAL FUNCTIONAL UNITS
MODULE RADIO A INTEGRER DANS DES UNITES FONCTIONNELLES EXTERNES

(30) Priorität: 10.01.1997 DE 19700622
(43) Veröffentlichungstag der Anmeldung: 27.10.1999
(73) Patentinhaber: SIEMENS AKTIENGESELLSCHAFT, 80333 München (DE)
(72) Erfinder: WEGHORST, Ingo, D-81675 München (DE)
(86) Internationale Anmeldenummer: DE9702287
(87) Internationale Veröffentlichungsnummer: WO98031128

(56) Entgegenhaltungen:
- EP-A- 0 618 746
- US-A- 5 465 401
- SHENG S ET AL: "A PORTABLE MULTIMEDIA TERMINAL" IEEE COMMUNICATIONS MAGAZINE, Bd. 30, Nr. 12, 1.Dezember 1992, Seiten 64-75, XP000330091

## Beschreibung

Die Erfindung betrifft ein Funkmodul zum Austausch digitaler Daten über Funk mit einer zentralen Basisstation eines Funksystems und/oder über diese mit weiteren, an das Funksystem angeschlossenen Teilnehmern, wobei das Funkmodul über einen Satz von Kommandos fernsteuerbar ist.

Zwischen den Teilnehmern eines Mobilfunknetzes bzw. Mobilfunksystems können digitale Daten ausgetauscht werden. Das Mobilfunksystem kann beispielsweise gemäß dem GSM-Standard (Funkübertragungssystem gemäß den Empfehlungen des CEPT-Unterausschusses Group Special Mobile oder Global System for Mobile Communication, GSM) ausgebildet sein.

Die ausgetauschten digitalen Daten können digitalisierte Sprachsignale sein, Daten zur Fax-Kommunikation oder ganz allgemein Daten für stationäre oder mobile Datenverarbeitungssysteme, wie Personal Computer oder Notebooks.

Zur Kommunikation im beziehungsweise über das Mobilfunknetz wird von einem Benutzer ein Funkgerät, beispielsweise ein sog. Handy verwendet.

Aus der US-PS 5,465,401 ist ein Kommunikationssystem bekannt, bei dem drahtlose und drahtgebundene Endgeräte eingesetzt werden. In diesen Endgeräten sind Applikationsmodule kontaktierbar, über die beispielsweise der Speicher erweitert wird, oder über die ein Umsetzung von Befehlen für Fernsehgeräte und Videorecorder, oder auch für einen Garagentoröffner erfolgt. Die hier angesprochenen Applikationen gehen weit über den reinen Kommunikationsbetrieb hinaus.

Es ist weiter bekannt, zur Kommunikation eine sog. PCMCIA-Karte, ergänzt mit einer Funkeinrichtung, zu verwenden. Diese PCMCIA-Karte benötigt als eine externe Bedienoberfläche beispielsweise einen Personal Computer. Die Bedienung der PCMCIA-Karte für den Funkverkehr und die Dateneingabe erfolgen dann über die Tastatur des Personal Computers, und die Meldungen der PCMCIA-Karte sowie die empfangenen Daten werden auf dem Monitor des Personal Computers dargestellt.

Es ist denkbar ein Funkmodul, das eine gewisse Ähnlichkeit mit der PCMCIA-Karte mit Funkeinrichtung aufweist, in allgemeine Konsumprodukte beziehungsweise Funktionseinheiten zu integrieren. Ein solches Konsumprodukt kann beispielsweise ein Auto-, ein Kofferradio oder ein GPS-Empfänger sein.

Ein solches Funkmodul hat keine eigenen Ein- und Ausgabeeinheiten, das heißt keine eigene Bedienoberfläche. Zur Realisierung dieser Mensch-Maschine-Schnittstelle (MMI) beziehungsweise Bedienoberfläche werden Einrichtungen und Module des Konsumgerätes verwendet, beispielsweise das Display und die Tastatur des Autoradios.

Die Anpassung der Mensch-Maschine-Schnittstelle an die Einund Ausgabeeinheit der Funktionseinheit ist sowohl vom Know-How als auch von der Entwicklung und der Codierung her aufwendig. Das Funkmodul nach dem GSM-Standard kann über einen standardisierten Befehlssatz (AT Cellular) ferngesteuert werden. Die spezifische Bedienoberfläche der Funktionseinheit, durch die eine Bedienung beziehungsweise Fernsteuerung des Funkmodules realisiert ist, läuft dann in der Funktionseinheit selbst oder in einer intelligenten Anzeigeeinrichtung ab. In beiden Fällen muß der Hardware- und der Softwareaufwand in der Funktionseinheit erhöht werden, das heißt es müssen ein grösserer Prozessor sowie ein grösserer Programm- und Arbeitsspeicher verwendet werden. Es kann hierbei notwendig werden, an Stelle eines 8-Bit Prozessors in einem Autoradio einen 16-Bit Prozessor zu verwenden. Ausserdem ist die Mobilfunk-Funktionalität nicht an einer Stelle konzentriert, so daß jeder Käufer des Konsumproduktes den erhöhte Aufwand mitbezahlt, egal ob er die Mobilfunk-Funktion benützt oder nicht.

Der Erfindung liegt die Aufgabe zugrunde, die Einbindung beziehungsweise Integration eines Funkmoduls in ein Konsumprodukt oder eine externe Funktionseinheit zu vereinfachen.

Diese Aufgabe wird erfindungsgemäß für ein Funkmodul durch die im Patentanspruch 1 und für ein Verfahren durch die im Patentanspruch 5 angegebenen Merkmale gelöst.

Bei Verwendung der Erfindung können spezifische Anwendungen des Konsumproduktes unabhängig von der für das Funkmodul benötigten Software entwickelt werden, da die für das Funkmodul benötigte Software nachträglich geladen wird. Der Gesamtkostenaufwand wird reduziert, und die Mobilfunk-Funktionalität an einer Stelle konzentriert.

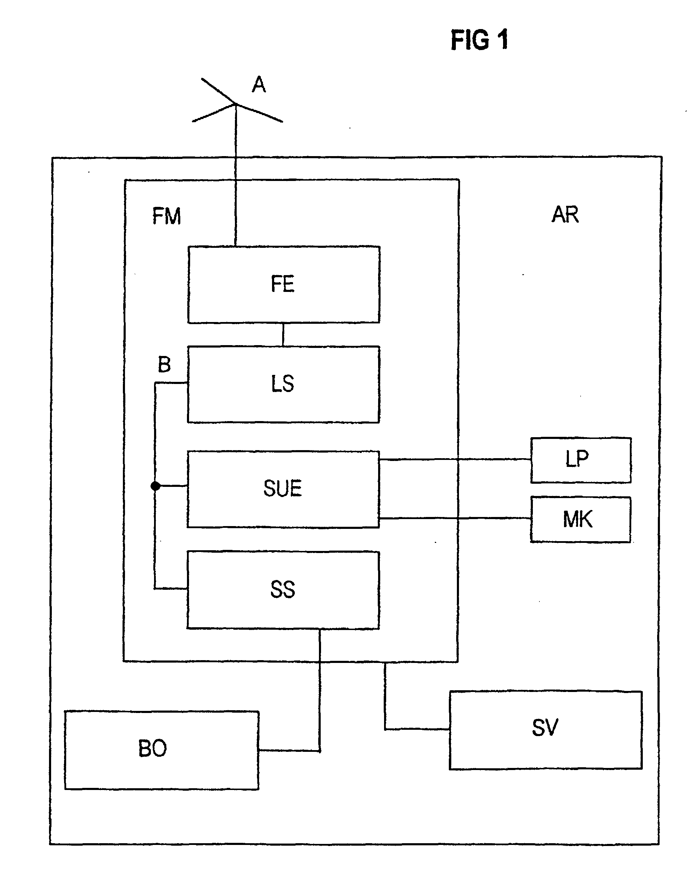

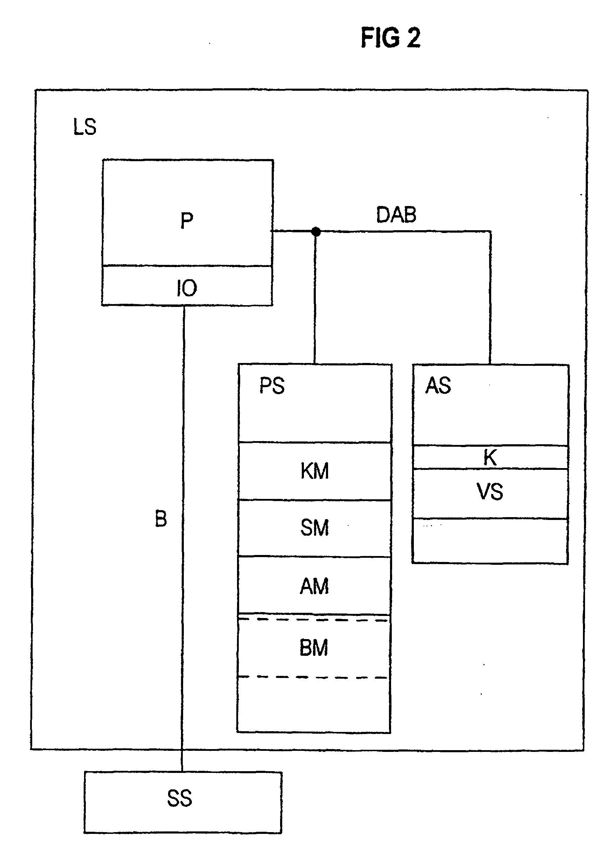

Im folgenden wird die Erfindung anhand eines in der Zeichnung dargestellten Ausführungsbeispieles beschrieben. Dabei zeigen FIG 1 ein in ein Autoradio integriertes Funkmodul, und FIG 2 die erfindungsgemäße Ausgestaltung des Funkmoduls.

In FIG 1 ist ein Funkmodul FM dargestellt, das über eine Antenne A mit einem nicht näher dargestellten Mobilfunksystem in Verbindung steht. Die Antenne A ist an einer Funkeinrichtung FE angeschaltet, die einen HF-Sender und einen -Empfänger aufweist. Die Funkeinrichtung FE ist mit einer Logikschaltung LS verbunden. Die Logikschaltung LS dient zur digitalen Signalverarbeitung der zwischen Funkmodul FM und Mobilfunksystem übertragenen Daten und zur Steuerung des Funkmodules FM selbst.

Eine Signalumformeinrichtung SUE dient zur Bearbeitung der analogen Sprachsignale, die beispielsweise über einen Lautsprecher LP ausgegeben werden bzw. von einem Mikrofon MK aufgenommen werden. Die Signalumformeinrichtung SUE weist hierzu A/D- bzw. D/A-Wandler bzw. Codec-Schaltungen auf.

Die Logikschaltung LS und die Signalumformeinrichtung SUE sowie eine beispielsweise serielle Schnittstelle SS sind miteinander über einen Bus B verbunden. Über die Schnittstelle SS ist ein Datenaustausch mit externen Geräten sowie eine Fernsteuerung des Funkmoduls FM möglich. Auf diese Fernsteuerung wird später noch ausführlich eingegangen.

Das Funkmodul FM ist in einem Konsumprodukt, beispielsweise einem Autoradio AR integriert.

Als Lautsprecher LP für das Funkmodul FM können dann die normalerweise für das Autoradio verwendeten Lautsprecher verwendet werden. Das Mikrofon MK kann im Autoradio AR selbst integriert sein, oder es kann am Rückspiegel eines Autos befestigt sein.

Eine Bedienoberfläche BO ist mit der Schnittstelle SS verbunden. Die Bedienoberfläche BO dient zur Eingabe von Ziffern und zum Aufrufen von Funktionen, und weiter zur Darstellung von Meldungen und Ziffern. Sie ist beispielsweise durch die schon vorhandenen Tasten und durch die Anzeigeeinrichtung des Autoradios AR realisiert. An einer schon im Autoradio AR vorhandenen Stromversorgung SV ist auch das Funkmodul FM angeschlossen.

Die Steuerung beziehungsweise Bedienung (Remote-Control) des Funkmoduls FM erfolgt über die Schnittstelle SS. In den GSM-Empfehlungen 07.07 und 07.05 ist eine Schnittstelle (Interface) für diesen Zweck spezifiziert. Nach diesen Empfehlungen wird die Schnittstelle als V.24-Schnittstelle auf der Schicht 1 (des OSl-Schichtenmodels) ausgebildet. Auf den höheren Schichten wurde ein GSM-Kommandosatz (AT Cellular) spezifiziert. Mit diesem Kommandosatz ist das Funkmodul FM fernzusteuern, d.h. man kann mit Hilfe der Kommandos abgehende Rufe aufbauen, ankommende Rufe entgegennehmen, die im Funkmodul FM vorhandene Chipkarte (in der Zeichnung nicht dargestellt) auslesen, Kurznachrichten entgegennehmen und anderes mehr. Das Funkmodul FM führt die Kommandos aus und gibt eine Antwort über das Miß- bzw. Gelingen zurück.

In einigen Fällen, beispielsweise bei einem ankommenden Ruf, generiert das Funkmodul FM von sich aus Meldungen, die über externe Funktionsmodule, das heißt die Anzeigeeinrichtung der Bedienoberfläche ausgegeben werden können. Das Erteilen dieser Kommandos, die Auswertung der Antworten, das Umsetzen in eine geeignete Bedienoberfläche, ist Aufgabe der externen Funktionsmodule, das heißt der, auf das Funkmodul FM bezogenen, externen Bedienoberfläche BO.

In FIG 2 sind die für das Verständnis der'Erfindung notwendigen Schaltungsdetails der Logikschaltung LS dargestellt.

Die Logikschaltung LS weist einen Prozessor P auf, der eine Eingabe- Ausgabeschaltung IO besitzt. Diese Eingabe- Ausgabeschaltung IO ist über einen Bus B zur Daten- und Adreßverbindung mit der Schnittstelle SS verbunden. Am Prozessor P sind über einen Datenadressbus DAB ein Programmspeicher PS und ein Arbeitsspeicher AS angeschaltet. Der Programmspeicher PS enthält ein Schnittstellenmodul SM, über das die Sende- und Empfangsroutine für die über die Schnittstelle SS ausgetauschten Daten ablaufen.

Der Programmspeicher PS ist vorzugsweise durch ein Flash-EEPROM realisiert. Der Programmspeicher PS enthält kein Modul, das eine Bedienoberfläche realisiert beziehungsweise durch das eine Bedienoberfläche angesteuert werden könnte. Statt dessen ist im Programmspeicher PS ein Kommandomodul KM implementiert, über das das Funkmodul FM unter Verwendung eines GSM-spezifizierten Kommandosatzes steuerbar ist. Die Ansteuerung das heißt die Zuführung der Kommandos erfolgt über die Schnittstelle SS.

Meist ist ein freier Bereich im Programmspeicher PS vorhanden. Erfindungsgemäß ist im Programmspeicher PS ein Applikationsmodul AM implementiert. Über Adreßvereinbarungen zwischen dem Kommandomodul KM und dem Applikationsmodul AM wird eine interne Umsetzungsschnittstelle hergestellt.

Dabei werden die vom Kommandomodul KM ausgegebenen Kommandos im Applikationsmodul AM ausgewertet und in applikationsspezifische Befehle umgesetzt. Die applikationsspezifischen Befehle werden über die Schnittstelle SS zur externen Applikation, d.h. im Ausführungsbeispiel zur Bedienoberfläche BO des Autoradios AR übertragen.

Analog hierzu werden applikationsspezifische Befehle, d.h. im Ausführungsbeispiel Eingaben über die Bedienoberfläche BO des Autoradios AR, im Applikationsmodul AM ausgewertet und in Kommandos umgesetzt, durch die das Funkmodul FM über das Kommandomodul KM angesteuert wird.

### Im einzelnen laufen diese Vorgänge folgendermaßen ab:

Umsetzungsschnittstelle vom Applikationsmodul AM zum Kommandomodul KM:
Von der Bedienoberfläche BO des Autoradios AR wird ein Befehl zur Fernsteuerung des Funkmoduls FM an die Schnittstelle SS gegeben. Von der Schnittstelle SS geht der Befehl an das Applikationsmodul AM, das diesen Befehl in ein GSM-spezifisches Kommando (AT Cellular) umsetzt und in einen mit dem Kommandomodul KM vereinbarten Speicherbereich VS im Arbeitsspeicher AS schreibt. Das Applikationsmodul AM informiert das Kommandomodul KM durch Aufruf einer vereinbarten Funktionsadresse. Daraufhin liest das Kommandomodul KM das Kommando aus dem Arbeitsspeicher AS und führt es aus, das heißt durch das Funkmodul FM wird beispielsweise eine Verbindung zu einem Funkteilnehmer aufgebaut.

Umsetzungsschnittstelle vom Kommandomodul KM zum Applikationsmodul AM:
Das Funkmodul FM wird beispielsweise von einem externen Funkteilnehmer angerufen. Diese Meldung soll auf der Bedienoberfläche BO dargestellt werden. Das Kommandomodul KM schreibt das Kommando in einen mit dem Applikationsmodul AM vereinbarten Speicherbereich VS im Arbeitsspeicher AS. Das Kommandomodul KM informiert das Applikationsmodul AM durch Aufruf einer vereinbarten Funktionsadresse. Daraufhin liest das Applikationsmodul AM das Kommando aus dem Arbeitsspeicher AS, setzt es in einen applikationsspezifischen Befehl um und stellt die entsprechende Meldung auf der Bedienoberfläche BO dar.

Für den Datenaustausch weist der Programmspeicher PS ein Schnittstellenmodul SM zur entsprechende Ansteuerung der Schnittstelle SS auf. Der Datenaustausch zwischen Bedienoberfläche BO und Funkmodul FM läuft folgendermaßen ab:

Beim Empfang von Daten von der Bedienoberfläche BO über die Schnittstelle SS schreibt die Empfangsroutine des Schnittstellenmoduls SM diese in einen vereinbarten Speicherbereich VS des Arbeitsspeichers AS. Optional wird im Arbeitsspeicher AS eine Kennung K gesetzt, über die das Applikationsmodul AM informiert wird, daß diese Daten von der Empfangsroutine stammen. Im Applikationsmodul AM wird eine vereinbarte Adresse aufgerufen. Daraufhin wertet das Applikationsmodul AM beispielsweise die Kennung K aus, liest die Daten aus dem Arbeitsspeicher AS aus und verarbeitet sie.

Beim Senden von Daten an die Bedienoberfläche BO über die Schnittstelle SS schreibt das Applikationsmodul AM diese in einen vereinbarten Speicherbereich VS des Arbeitsspeichers AS. Im Sendemodul SM wird eine vereinbarte Adresse aufgerufen. Daraufhin liest das Sendemodul SM die Daten aus dem Arbeitsspeicher AS aus und sendet diese an die Bedienoberfläche BO.

Erfindungsgemäß befindet sich die AT Cellular Schnittstelle auf der Kommandoebene jetzt im Funkmodul FM selbst. Über die (beispielsweise V-24) Schnittstelle SS werden applikationsspezifische Befehle verwendet, zum Beispiel für den Transport der Information der Bedienoberfläche BO zum Funkmodul FM, oder die Übertragung der darzustellenden Strings zur Bedienoberfläche BO.

Bei einer Ausgestaltung der Erfindung ist das Applikationsmodul AM nachrüstbar ausgebildet. Ein von der Fabrik ausgeliefertes Funkmodul FM weist kein solches Applikationsmodul AM auf, sondern dieses wird nachträglich in der Logikschaltung LS hinzugefügt. Das Applikationsmodul AM kann beispielsweise steckbar ausgebildet sein. Es wird dann nachträglich in der Logikschaltung LS an einem mit dem Programmspeicher PS verbundenen Steckplatz eingesetzt. Die Nachrüstung kann beim Hersteller des Konsumproduktes, das heißt beim Ausführungsbeispiel beim Hersteller des Autoradios AR erfolgen.

Bei einer weiteren Ausgestaltung der Erfindung ist fabrikseitig im Programmspeicher PS ein Bootmodul BM implementiert. Bei der Realisierung des Programmspeichers PS als Flash-EEPROM kann das komplette Programm und es können auch Teile des Programms segmentweise gelöscht und neu beschrieben werden. Es können also Module im Programmspeicher PS ergänzt werden, deren Dateninhalt über die Schnittstelle SS geladen wird. Beispielsweise beim Hersteller des Autoradios AR wird über das Bootmodul BM das Applikationsmodul AM in die freien beziehungsweise in die zuvor gelöschten Segmente des Programmspeichers PS geladen.

## Patentansprüche

1. Funkmodul (FM) zum Austausch digitaler Daten über Funk mit einer zentralen Basisstation eines Funksystems und/oder über diese mit weiteren, an das Funksystem angeschlossenen Teilnehmern,
mit einer Logikschaltung (LS) zur digitalen Signalverarbeitung und Steuerung der Datenkommunikation des Funksystems mit dem Funkmodul (FM),
mit einer mit der Logikschaltung (LS) in Verbindung stehenden Schnittstelle (SS) zur Anbindung einer externen Bedienoberfläche (BO),
bei dem die Logikschaltung (LS) ein Kommandomodul (KM) zur Fernsteuerung des Funkmoduls (FM) aufweist, und
bei dem die Logikschaltung (LS) ein Applikationsmodul (AM) zur Ansteuerung der externen Bedienoberfläche (BO) aufweist, wobei über Adressvereinbarungen zwischen dem Kommandomodul (KM) und dem Applikationsmodul (AM) eine interne Umsetzungsschnittstelle gebildet ist, so dass einerseits die vom Kommandomodul (KM) ausgegebenen Daten und Kommandos im Applikationsmodul (AM) ausgewertet und in für die Bedienoberfläche (BO) spezifische Daten und Befehle, und andrerseits die von der Bedienoberfläche (BO) ausgegebenen Daten und Befehle im Applikationsmodul (AM) ausgewertet und in Daten und Kommandos für das Kommandomodul (KM) umgesetzt werden.

2. Funkmodul (PM) nach Anspruch 1,
bei dem das Applikationsmodul (AM) nachrüstbar ausgebildet ist.

3. Funkmodul (FM) nach Anspruch 2,
bei dem das Applikationsmodul (AM) steckbar ausgebildet ist

4. Funkmodul (FM) nach Anspruch 2,
bei dem die Logikschaltung (LS) ein Bootmodul (BM) aufweist, durch das das Applikationsmodul (AM) in die Logikschaltung (LS) ladbar ist.

## Claims

1. Radio module (FM) for interchanging d by radio with a central base station in a r- and/or via this central base station subscribers connected to the radio system,
having a logic circuit (LS) for digi processing and for controlling the data cc in the radio system with the radio module (FI having an interface (SS) connected to the lc (LS) for the purpose of linking an ext interface (BO),
in which the logic circuit (LS) has a com (KM) for remotely controlling the radio m and
in which the logic circuit (LS) has an module (AM) for actuating the external use (BO), where address agreements between t module (KM) and the application module (AM) form an internal conversion interface, so t the data and commands which are output by module (KM) are evaluated in the applica (AM) and are converted into data and command to the user interface (BO), and secondly t commands which are output by the user int are evaluated in the application module z converted into data and commands for the con (KM).

2. Radio module (FM) according to Claim 1,
in which the application module (AM) is designed to be retrofittable.

3. Radio module (FM) according to Claim 2,
in which the application module (AM) is designed to be able to be plugged in.

4. Radio module (FM) according to Claim 2,
in which the logic circuit (LS) has a boot module (BM) which allows the application module (AM) to be loaded into the logic circuit (LS).

## Revendications

1. Module radio (FM) prévu pour échanger par radio des données numériques avec une station de base centralisée d'un système radio et/ou par l'intermédiaire de cette dernière, avec d'autres abonnés raccordés au système radio, ayant
un circuit logique (LS) destiné au traitement numérique des signaux et à la commande de la communication de données du système radio avec le module radio (FM),
une interface (SS) reliée au circuit logique (LS) et destinée à l'intégration d'une interface de commande externe (BO),
dans lequel le circuit logique (LS) comporte un module d'instructions (KM) destiné à la télécommande du module radio (FM) et
dans lequel le circuit logique (LS) comporte une module d'application (AM) destiné à l'excitation de l'interface externe de commande (BO),
une interface interne de conversion étant formée par l'intermédiaire de conventions d'adressage entre le module d'instructions (KM) et le module d'application (AM), si bien que, d'une part, les données et les instructions émises par le module d'instructions (KM) sont évaluées dans le module d'application (AM) et converties en données et ordres spécifiques pour l'interface de commande (BO) et, d'autre part, les données et ordres émis par l'interface de commande (BO) sont évalués dans le module d'application (AM) et convertis en données et instructions pour le module d'instructions (KM).

2. Module radio (FM) selon la revendication 1
dans lequel le module d'application (AM) est conçu de telle sorte qu'il peut être monté ultérieurement.

3. Module radio (FM) selon la revendication 2
dans lequel le module d'application (AM) est conçu de telle sorte qu'il est enfichable.

4. Module radio (FM) selon la revendication 2
dans lequel le circuit logique (LS) comporte un module de démarrage ou de bootage (BM) grâce auquel on peut charger le module d'application (AM) dans le circuit logique (LS).
